# EUROPÄISCHE PATENTSCHRIFT

(11) **EP 0 651 344 B1**
(45) Veröffentlichungstag und Bekanntmachung des Hinweises auf die Patenterteilung: **21.04.1999**
(21) Anmeldenummer: 94116924.5
(22) Anmeldetag: 26.10.1994
(51) Int. Cl.: G06K 7/10, G01S 13/02, G01V 15/00

(54) **Identifizierungssystem mit akustischen Oberflächenwellen arbeitenden ID-Tags**
Identifying system with ID-tags working with surface acoustic waves
Système d'identification avec d'étiquettes d'identification fonctionnant avec des ondes acoustiques de surface

(30) Priorität: 28.10.1993 DE 4336897
(43) Veröffentlichungstag der Anmeldung: 03.05.1995
(73) Patentinhaber: SIEMENS AKTIENGESELLSCHAFT, 80333 München (DE)
(72) Erfinder: Reindl, Leonhard, Dipl.-Phys., D-83134 Prutting (DE); Ruile, Werner, Dipl.-Phys., D-80636 München (DE); Ruppel, Clemens, Dr., D-81679 München (DE)

(56) Entgegenhaltungen:
- WO-A-93/13495
- GB-A- 2 238 210

## Beschreibung

Die vorliegende Erfindung betrifft ein Identifizierungssystem nach dem Oberbegriff des Patentanspruchs 1.

Identifizierungssysteme der gattungsgemäßen Art sind Sende- und Empfangssysteme, in denen für Identifizierungszwecke als abzufragende Elemente mit akustischen Oberflächenwellen arbeitende Identifizierungsmarken, sogenannte ID-Tags verwendet. Derartige ID-Tags sind Bauelemente, in denen ein elektrisches Signal mittels eines Wandlers in eine akustische Oberflachenwelle umgesetzt wird, welche an einer Folge von Reflektoren reflektiert wird, wobei die reflektierte akustische Oberflachenwelle durch einen Wandler, welcher gleich dem das elektrische Eingangssignal umsetzenden Wandler sein kann, wieder in ein elektrisches Signal umgesetzt wird. In Abhängigkeit von der Konfiguration der Reflektoren entsteht ein vorgegebener Code, welcher dieses ID-Tag repräsentiert. Das den Code repräsentierende elektrische Signal wird auf das das Abfragesignal aussendende System zurückgesendet, wodurch die Stelle identifizierbar ist, an der das ID-Tag angeordnet ist. Derartige Identifikationssysteme sind in einer großen Vielzahl von Anwendungsfallen verwendbar.

Bei vielen Anwendungen derartiger Identifikationssysteme, beispielsweise bei Verwendung von ID-Tags als Balisen im Schienenverkehr kann eine gegenseitige Störung von mehreren getrennten gleichzeitig abfragenden Sende/Empfangsgeraten zum Problem werden. Will man derartige Störungen dadurch verhindern, daß man eine Synchronisation verschiedener abfragender Sende/Empfangsgerate durchführt, so ist dies aufwendig und störanfällig.

Der vorliegenden Erfindung liegt die Aufgabe zugrunde, ein Identifizierungssystem der in Rede stehenden Art anzugeben, das wenig aufwendig und weitestgehend störungsfrei ist.

Diese Aufgabe wird bei einem Identifizierungssystem der eingangs genannten Art erfindungsgemäß durch die Merkmale des kennzeichnenden Teils des Patentanspruchs 1 gelöst.

Weiterbildungen der Erfindung sind Gegenstand von Unteransprüchen.

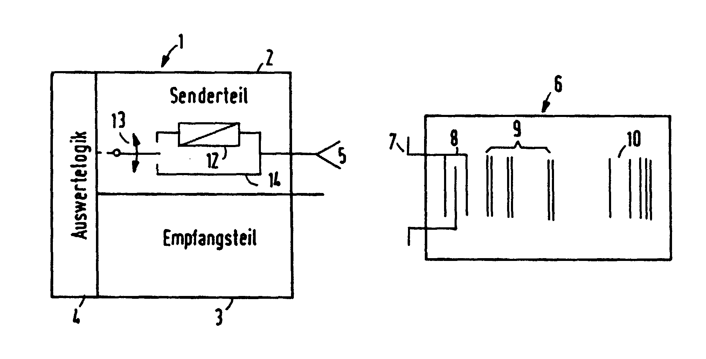

Die Erfindung wird nachfolgend anhand von Ausführungsbeispielen unter Bezugnahme auf die einzige Figur der Zeichnung näher erläutert. Die Figur der Zeichnung zeigt in schematischer Darstellung ein Identifizierungssystem mit einem Sende/Empfangsgerät und einem ID-Tag als abzufragendes Element.

Gemäß der Figur der Zeichnung besteht ein an sich bekanntes Sende/Empfangsgerät 1 für ein Identifizierungssystem aus einem Senderteil 2, einem Empfangsteil 3, einer Auswertelogik 4 sowie einer an den Senderteil 2 angekoppelten Antenne 5 zur Abstrahlung eines Abfragesignals. Da derartige Komponenten an sich bekannt sind, brauchen sie hier nicht naher erläutert zu werden.

Ein durch das Sende/Empfangsgerät abzufragendes ID-Tag 6 besteht generell aus einer Antenne 7, welche ein vom Sende/Empfangsgerät 1 abgestrahltes Abfragesignal aufnimmt, einem an die Antenne angekoppelten Interdigitalwandler 8, welcher das empfangene Abfragesignal in eine akustische Oberflachenwelle umsetzt, sowie einer Folge von Reflektoren 9, welche mindestens einen Teil der akustischen Oberflachenwelle auf den Interdigitalwandler 8 rückreflektieren und einen das ID-Tag kennzeichnenden Code definieren. Insoweit ist ein ID-Tag ebenfalls an sich bekannt, z.B. auch aus WO-A-93/13495 und GB-A-2 238 210.

Um Störungen der obengenannten Art auszuschalten, ist erfindungsgemäß einerseits im ID-Tag 6 ein weiterer Reflektor 10 vorgesehen, der als Spread-Spectrum-Reflektor ausgebildet ist. Andererseits ist im Sende/Empfangsgerät 1 in seinem Sende- und/oder Empfangsteil 2 bzw. 3 eine Stufe 12 mit gegenüber der Charakteristik des Spread-Spectrum-Reflektors 10 im ID-Tag 6 komplementärer Charakteristik enthalten. Damit kann vom Senderteil 2 des Sende/Empfangsgerates 1 ein Spread-Spectrum-Signal ausgesendet werden, das durch den komplementären Spread-Spectrum-Reflektor 10 im ID-Tag 6 "erkannt" wird, wodurch dieses ID-Tag eindeutig identifizierbar ist. Mit anderen Worten ausgedrückt, "meldet" damit das ID-Tag sein Vorhandensein.

In Weiterbildung der Erfindung kann das Sende/Empfangsgerät 1 derart ausgebildet werden, daß es in zwei Betriebszuständen betreibbar ist, wobei es in einem ersten Betriebszustand ein Abfragesignal im vorgennanten Sinne, d. h. mit an den Spread-Spectrum-Reflektor 10 angepaßter Charakteristik aussendet und in Abhängigkeit vom Empfang eines Antwortsignals vom Spread-Spectrum-Reflektor 10 in einen zweiten Betriebszustand zum Auslesen von Daten aus dem ID-Tag entsprechend den Reflektoren 9 übergeht. Zu diesem Zweck kann im Senderteil nach Aussenden des abfragenden Spread-Spectrum-Signals über die Stufe 12 und Empfang des entsprechenden Antwortsignals in Abhängigkeit von diesem Antwortsignal über einen Schalter 13, der beispielsweise in der schematisch gestrichelt dargestellten Weise von der Auswertelogik 4 gesteuert wird, eine Umschaltung auf einen Zweig 14 erfolgen, über den ein Abfragesignal zum Auslesen von durch die Reflektoren 9 definierten Daten ausgesendet wird.

Ein Spread-Spectrum-Reflektor 10 im ID-Tag 6 ist auf verschiedene Weise realisierbar. Es sind beispielsweise dispersive Elemente oder PSK(Phase Shift Keying)- oder MSK(Minimum Shift Keying)-Element verwendbar. Durch derartig ausgebildete Reflektoren wird das Abfragesignal moduliert. Es muß sich dabei auch nicht um ein einziges Element handeln; die Modulation kann auch durch das Zusammenwirken mehrerer Element zustande kommen. Entsprechend ist auch die Stufe 12 im Sender- und Empfangsteil 2, 3 ausbildbar. Die dispersiven Elemente in den ID-Tags können dabei z.B. das konjungiert komplexe des im Zeitbereich doppelt so großen Modulationssignals aufweisen. Diese Elemente drehen damit das Modulationssignal der Abfrage gleichsam um. Im Empfangsteil 3 wird dieses Antwortsignal vorteilhafterweise komprimiert und das Abfragesignal dekomprimiert. Die Störanfälligkeit erniedrigt sich dabei um das Doppelte des Kompressionsgewinns.

Durch eine Modulation der oben erläuterten Art unterscheidet sich das zu erwartende Antwortsignal vom Abfragesignal und kann daher in der Auswertelogik 4 durch an sich bekannte Mittel getrennt werden, so daß auf diese Weise erreicht werden kann, daß in der Auswertelogik gesuchte Antworten von störenden Abfragesignalen aus anderen Sende/Empfangsgeräten 1 getrennt werden können.

Ein besonderer Vorteil von erfindungsgemaßen Identifizierungen besteht bei Verwendung von dispersiven Reflektoren in ID-Tags und dazu komplementären Stufen nach Art der Stufe 12 im Senderteil 2 darin, daß die Abfragesignale in den ID-Tags komprimiert und komprimierte Antwortsignale zurückgesendet werden. Diese Antwortsignale sind um den Kompressionsgewinn angehoben. Da die Abfragesignale an sich nicht komprimiert sind, erniedrigt sich somit die Störanfälligkeit des Systems gegen andere abfragende Sende/Empfangsgeräte um den Kompressionsgewinn. Außerdem unterscheidet sich die Zeitlänge des gewünschten komprimierten Antwortsignals drastisch vom dekomprimierten un- erwünschten Abfragesignal eines anderen Sende/Empfangsgerätes und kann auch dadurch unterschieden werden.

Es ist weiterhin darauf hinzuweisen, daß im Rahmen der Erfindung die Umschaltung zwischen den Abfragesignalen nicht notwendigerweise nur im Senderteil 2 durchgeführt werden muß. Vielmehr kann eine Stufe entsprechend der Stufe 12 mit gegenüber der Charakteristik des Spread-Spectrum-Reflektors 10 komplementärer Charakteristik auch im Empfangsteil 3 vorgesehen werden, wobei dann nach Empfang eines Spread-Spectrum-Antwortsignals vom ID-Tag 6 im Empfangsteil 3 eine Umschaltung auf ein Abfragesignal für die Daten entsprechend den Reflektoren 9 im ID-Tag erfolgt. Weiterhin ist auch eine Umschaltung sowohl im Senderteil 2 als auch im Empfangsteil 3 möglich.

## Patentansprüche

1. Identifizierungssystem mit einem Sende/Empfangsgerät (1) und mit von diesem abfragbaren mit akustischen Oberflächenwellen arbeitenden Identifizierungsmarken (6 - OFW-ID-Tags), **dadurch gekennzeichnet**, daß mindestens ein Reflektor (10) der ID-Tags (6) als Spread-Spectrum-Reflektor ausgebildet ist und das Sende/Empfangsgerät (1) in seinem Sende- und/oder Empfangsteil (2, 3) eine Stufe (12) mit gegenüber der Charakteristik des Sprgad-Spectrum-Reflektors (10) komplementärer Charakteristik enthält.

2. Identifizierungssystem nach Anspruch 1, **dadurch gekennzeichnet**, daß der Reflektor (10) ein dispersiver Reflektor ist.

3. Identifizierungssystem nach Anspruch 1, **dadurch gekennzeichnet**, daß der Reflektor (10) ein Phase-Shift-Keying-Reflektor ist.

4. Identifizierungssystem nach Anspruch 1, **dadurch gekennzeichnet**, daß der Reflektor (10) ein Minimum-Shift-Keying-Reflektor ist.

5. Identifizierungssystem nach einem der Ansprüche 1 bis 4, **dadurch gekennzeichnet**, daß das Sende/Empfangsgerät (1) in zwei Betriebszuständen betreibbar ist, derart, daß es in einem ersten Betriebszustand ein Abfragesignal mit an den Spread-Spectrum-Reflektor (10) angepaßter Charakteristik aussendet und in Abhängigkeit vom Empfang eines Antwortsignals vom Spread-Spectrum-Reflektor (10) in einen zweiten Betriebszustand zum Auslesen von Daten aus dem zugehörigen ID-Tag (6) übergeht.

## Claims

1. Identification system having a transceiver (1) and having identification tags (6 - SAW-ID tags), which can be interrogated by the said transceiver and work with surface acoustic waves, **characterized in that** at least one reflector (10) of the ID tags (6) is designed as a spread spectrum reflector and the transceiver (1) contains, in its transmitting and/or receiving part (2, 3), a stage (12) having a characteristic which is complementary to the characteristic of the spread spectrum reflector (10).

2. Identification system according to Claim 1, **characterized in that** the reflector (10) is a dispersive reflector.

3. Identification system according to Claim 1, **characterized in that** the reflector (10) is a phase shift keying reflector.

4. Identification system according to Claim 1, **characterized in that** the reflector (10) is a minimum shift keying reflector.

5. Identification system according to one of Claims 1 to 4, **characterized in that** the transceiver (1) can be operated in two operating states, in such a way that, in a first operating state, it transmits an interrogation signal with a characteristic matched to the spread spectrum reflector (10) and, depending on the reception of a response signal from the spread spectrum reflector (10), changes over to a second operating state for reading data from the associated ID tag (6).

## Revendications

1. Système d'identification comportant un dispositif (1) d'émission/réception et des repères (6 - OFW-ID-Tags) d'identification fonctionnant avec des ondes de surface acoustiques et pouvant être interrogés par le dispositif (1), caractérisé en ce que au moins un réflecteur (10) des ID-Tags (6) est formé en tant que réflecteur Spread-Spectrum et en ce que le dispositif (1) d'émission/réception comporte dans sa partie (2,3) d'émission et/ou de réception un étage (12) ayant une caractéristique complémentaire vis-à-vis de la caractéristique du réflecteur (10) Spread-Spectrum.

2. Système d'identification suivant la revendication 1, caractérisé en ce que le réflecteur (10) est un réflecteur à dispersion.

3. Système d'identification suivant la revendication 1, caractérisé en ce que le réflecteur (10) est un réflecteur à phase-Shift-Keying.

4. Système d'identification suivant la revendication 1, caractérisé en ce que le réflecteur (10) est un réflecteur à minimum-Shift-Keying.

5. Système d'identification suivant l'une des revendications 1 à 4, caractérisé en ce que le dispositif (1) d'émission/réception peut fonctionner dans deux états de fonctionnement, de sorte qu'il envoie, dans un premier état de fonctionnement un signal d'interrogation ayant une caractéristique adaptée au réflecteur (10) Spread-Spectrum et, en fonction de la réception d'un signal de réponse du réflecteur (10) Spread-Spectrum, passe dans un second état de fonctionnement pour la lecture de données provenant du ID-Tag (6) associé.
